# EUROPÄISCHE PATENTANMELDUNG

(11) **EP 1 936 847 A1**
(43) Veröffentlichungstag der Anmeldung: **25.06.2008**
(21) Anmeldenummer: 07023490.1
(22) Anmeldetag: 04.12.2007
(51) Int. Cl.: H04J 3/06, H04L 7/033

(54) **Netzsynchrone Datenschnittstelle**

(30) Priorität: 21.12.2006 DE 102006060821
(71) Anmelder: Infineon Technologies AG, 85579 Neubiberg (DE)
(72) Erfinder: Pitzer, Armin, 47800 Krefeld (DE); Renner, Martin, 40822 Mettmann (DE)
(74) Vertreter: Patentanwälte Lambsdorff & Lange

(57) **Zusammenfassung**

Eine Anordnung umfasst eine Datenschnittstelle (103), die einen Dateneingang zur Entgegennahme von ersten Datenpaketen aus einem an den Dateneingang anschließbaren, synchronen Netz (101) aufweist. Ferner weist die Anordnung ein Netz-Endgerät (104) und eine sich zwischen der Datenschnittstelle (300) und dem Netz-Endgerät (104) erstreckende paketorientierte, synchrone Datenverbindung (105) auf. Die Datenschnittstelle (103) ist ausgelegt, den Takt der Datenverbindung (105) aus dem Takt des synchronen Netzes (101) abzuleiten.

## Beschreibung

Die Erfindung betrifft eine paketorientierte Datenschnittstelle zwischen einem synchronen Netz und einem Netz-Endgerät oder einem weiteren synchronen oder plesiochronen Netz.

Synchrone Netzwerke (im Folgenden auch als Netze bezeichnet), in welchen Daten mittels Datenpaketen übertragen werden, werden in vielen Bereichen der Kommunikationstechnik zur Übertragung von z.B. Sprache, Musik, Bildern, Video usw. eingesetzt. Die Daten aus dem Netz werden Nutzern an Datenschnittstellen bereitgestellt und über Datenverbindungen zu den jeweiligen Netz-Endgeräten, wie beispielsweise einem PC (Personal-Computer) oder einer Set-Top-Box eines Fernsehers, übertragen. Es ist auch möglich, Daten über eine Datenschnittstelle und eine Datenverbindung von einem synchronen Netz zu einem Netzknoten eines anderen synchronen Netzes zu übertragen.

Die Datenübertragung über die Datenverbindung ist typischerweise asynchron. Für bestimmte Anwendungen oder bei bestimmten Übertragungsverfahren ist am Netz-Endgerät oder an dem Netzwerkknoten des anderen Netzes die Verfügbarkeit eines hochgenauen Systemtaktes erforderlich. In diesem Fall stellt die paketorientierte Datenschnittstelle beispielsweise über hochgenaue lokale Taktgeneratoren oder einen GPS-(Global Positioning System) Taktempfänger einen hochgenauen Netzwerksynchronen Takt bereit, der die jeweiligen Schnittstellenanforderungen im Hinblick auf Jitter und Langzeit-Jitter (Wander) erfüllt. Dieser Takt wird über aufwändige Verfahren (z.B. Timestamp-Verfahren zur Taktsynchronisation) von der Datenschnittstelle zu dem Netz-Endgerät oder dem Netzwerkknoten des anderen, synchronen Netzes übertragen.

Vor diesem Hintergrund besteht das Bedürfnis, andere, gegebenenfalls einfachere Möglichkeiten zur Bereitstellung des Netzwerktaktes im Netz-Endgerät bzw. an dem Netzwerkknoten des anderen synchronen Netzes vorzusehen.

Verschiedene Aspekte der Erfindung sind in den unabhängigen Patentansprüchen angegeben.

Nachfolgend werden Ausführungsbeispiele der Erfindung in beispielhafter Weise anhand der Zeichnungen erläutert; in diesen zeigen:
- Fig. 1: eine schematische Blockschaltbild-Darstellung eines synchronen Netzes, welches über eine Datenschnittstelle an ein Netz-Endgerät gekoppelt ist;
- Fig. 2: eine schematische Blockschaltbild-Darstellung eines synchronen Netzes, welches über eine Datenschnittstelle an einen Netzknoten eines anderen synchronen oder plesiochronen Netzes gekoppelt ist;
- Fig. 3: eine Blockschaltbild-Darstellung einer Datenschnittstelle;
- Fig. 4: ein Flussdiagramm zur Erläuterung von Verfahrensschritten zur Übertragung von Daten aus einem synchronen Netz über eine Datenschnittstelle zu einem Netz-Endgerät oder einem Netzknoten eines anderen synchronen Netzes; und
- Fig. 5: ein Ausführungsbeispiel, bei welchem das synchrone Netz durch ein GPON (Gigabit Passiv Optical Network) realisiert ist.

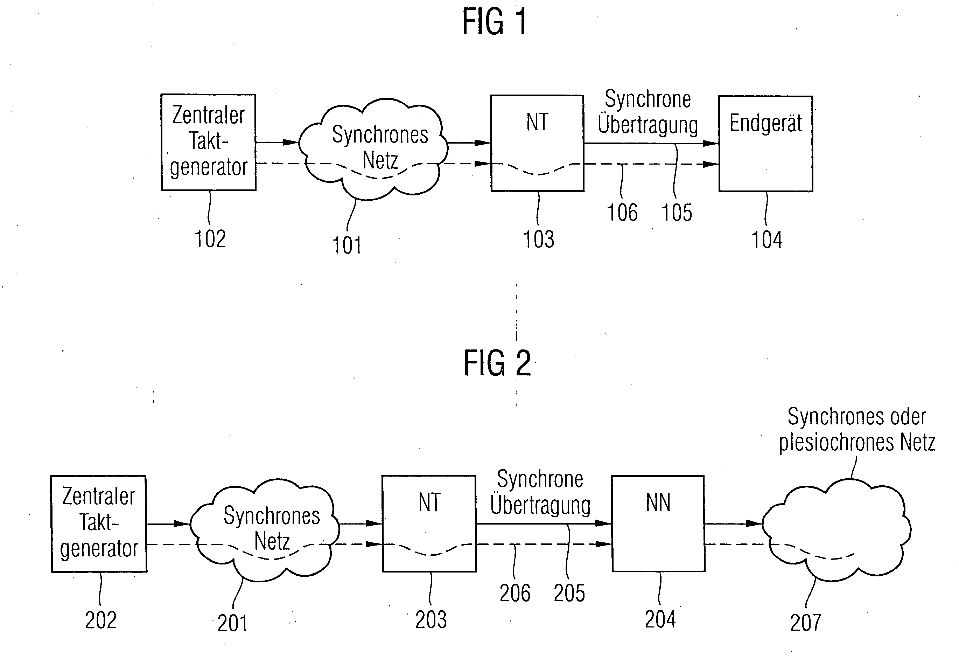

Fig. 1 zeigt ein synchrones Netz 101, welches von einem zentralen Taktgenerator 102 getaktet wird. In einem synchronen Netz existiert ein universeller, kontinuierlicher Zeittakt, der durch den zentralen Taktgenerator 102 vorgegeben wird und für sämtliche technische Einrichtungen (z.B. Netzknoten, Netzabschlüsse) im Netz gilt.

Gemäß Fig. 1 umfasst das synchrone Netz 101 eine Datenschnittstelle 103. Die Datenschnittstelle 103 ist ein Netzabschluss (auch als Netz-Terminierung (NT) bezeichnet), d.h. eine technische Einrichtung des synchronen Netzes 101, an welche ein Netz-Endgerät 104 angeschlossen ist. Sie wird deshalb auch als Anwender-Schnittstelle bezeichnet. Dabei findet die Übertragung der Daten zwischen dem Netzabschluss 103 und dem Netz-Endgerät 104 über eine Datenverbindung 105 statt, die eine synchrone Übertragung zwischen dem Netzabschluss 103 und dem Netz-Endgerät 104 realisiert. Der Takt der synchronen Übertragung über die Datenverbindung 105 wird von dem Netzabschluss 103 aus dem zentralen Takt des synchronen Netzes 101 abgeleitet. Dies wird durch die gestrichelte Linie 106 veranschaulicht, die sich von dem synchronen Netz 101 durch den Netzabschluss 103 hindurch über die synchrone Datenverbindung 105 bis in das Netz-Endgerät 104 erstreckt. Dadurch ist das Netz-Endgerät 104 mit dem Zentraltakt im synchronen Netz 101 synchronisiert und kann für Anwendungen, bei welchen die Verfügbarkeit eines hochgenauen Systemtaktes erforderlich ist, eingesetzt werden. Bei dem Netz-Endgerät 104 kann es sich beispielsweise um einen PC, eine Mobilfunk-Basisstation oder eine Set-Top-Box eines Fernsehers handeln.

Fig. 2 entspricht bezüglich des synchronen Netzes 201, des zentralen Taktgenerators 202 und des Netzabschlusses 203 der in Fig. 1 dargestellten Anordnung. Zwischen dem Netzabschluss 203 und einem Netzknoten 204 (NN: Net Node) eines weiteren synchronen Netzes 207 besteht eine Datenverbindung 205.

Der Netzabschluss 203 arbeitet in derselben Weise wie der Netzabschluss 103. D.h., der Netzabschluss 203 leitet aus dem zentralen Takt des synchronen Netzes 201 den Takt für die synchrone Datenverbindung 205 ab. Die mit diesem abgeleiteten Takt über die Datenverbindung 205 übertragenen Daten werden von dem Netzknoten 204 entgegengenommen und in das weitere synchrone oder plesiochrone Netz 207 eingespeist. Durch die Ableitung des zentralen Taktes des synchronen Netzes 201 in dem Netzabschluss 203 wird erreicht, dass die synchrone Datenverbindung 205 sowie das weitere synchrone Netz 207 mit dem Zentraltakt des synchronen Netzes 201 synchronisiert ist. Die Taktübertragung von dem synchronen Netz 201 über den Netzabschluss 203 und die synchrone Datenverbindung 205 in den Netzknoten (NN) 204 des weiteren synchronen Netzes 207 ist durch die gestrichelte Linie 206 veranschaulicht. Ein Vorteil der erfindungsgemäßen Taktableitung in den Netzabschlüssen 103, 203 gegenüber einer herkömmlichen Sendetakt-Erzeugung durch einen lokalen Referenztakt besteht darin, dass die Taktableitung vollständig in einem integrierten Schaltkreis implementiert sein kann, während ein gemäß der herkömmlichen Vorgehensweise erzeugter lokaler Referenztakt off-chip durch einen externen Quarz-Taktgenerator bereitgestellt werden muss.

Sowohl bei der Anordnung gemäß Fig. 1 als auch bei der Anordnung gemäß Fig. 2 bewirkt die Taktableitung in der Datenschnittstelle (Netzabschluss 103 oder 203), dass der Bittakt auf der Datenverbindung 105, 205 in einem festen Verhältnis zu dem durch den zentralen Taktgenerator 102, 202 vorgegebenen Bittakt in dem synchronen Netz 101, 201 ist. Die bei konventionellen Anordnungen mit lokaler Referenztakterzeugung in den Netzabschlüssen 103, 203 vorhandene Taktgrenze ist damit aufgehoben. Denn es wird in den Netzabschlüssen 103, 203 anders als bei herkömmlichen, vergleichbaren Anordnungen kein lokaler Referenztakt benötigt, da die Erzeugung des Sendetaktes durch Ableitung des Zentraltaktes aus dem synchronen Netz 101, 201 erfolgt.

Den in den Figuren 1 und 2 gezeigten Anordnungen ist gemeinsam, dass es sich bei dem synchronen Netz 101, 201 um ein paketorientiertes Netz handelt, d.h. die Datenübertragung über vordefinierte erste Datenpakete erfolgt. Die Datenübertragung über die synchrone Datenverbindung 105, 205 erfolgt ebenfalls Paket-orientiert, wobei die hier verwendeten zweiten Datenpakete in Bezug auf das Datenpaketformat bzw. die Datenpaketstruktur unterschiedlich zu den ersten Datenpaketen sein können.

Bei dem synchronen Netz 101, 201 kann es sich um ein leitungsbasiertes (optische oder elektrische Leitungen) oder drahtloses Netz handeln. Derartige synchrone Netze 101, 201, bei welchen der Zentraltakt des synchronen Netzes 101, 201 bei herkömmlichen Systemen über eine asynchrone Datenverbindung zu einem Netz-Endgerät bzw. einem anderen Netz übertragen wird, sind beispielsweise SONET (Synchronous Optical Network), SDH (Synchronous Digital Hierarchy) oder PON (Passive Optical Network), darunter APON (ATM Passive Optical Network), BPON (Broadband Passive Optical Network), GPON (Gigabit Passive Optical Network) und EPON (Ethernet Passive Optical Network) einschließlich 10G EPON. Optische Netze können teilweise auch elektrische Komponenten und Übertragungsstrecken enthalten.

SDH und SONET sind weitverbreitete synchrone Netze. SDH ist in den Standards G.707, G.708, G.793 und G.803 der ITU (International Telecommunications Unit) standardisiert. SONET ist in GR-253-CORE der Telcordia standardisiert. Beide Netzstandards nutzen Datenrahmen einer Zeitdauer von 125 µs, wobei die Struktur der Datenrahmen unterschiedlich ist. PON verwendet ebenfalls eine feste TDMA (Time Division Multiplex Access) Struktur. APON und BPON sind in dem Standard ITU-T G.983 standardisiert. GPON ist in dem Standard ITU-T G.984 und EPON ist in dem Standard IEEE 802.3ah festgelegt. 10G EPON wird derzeit standardisiert und ist auch unter XEPON oder 10-GEPON bekannt.

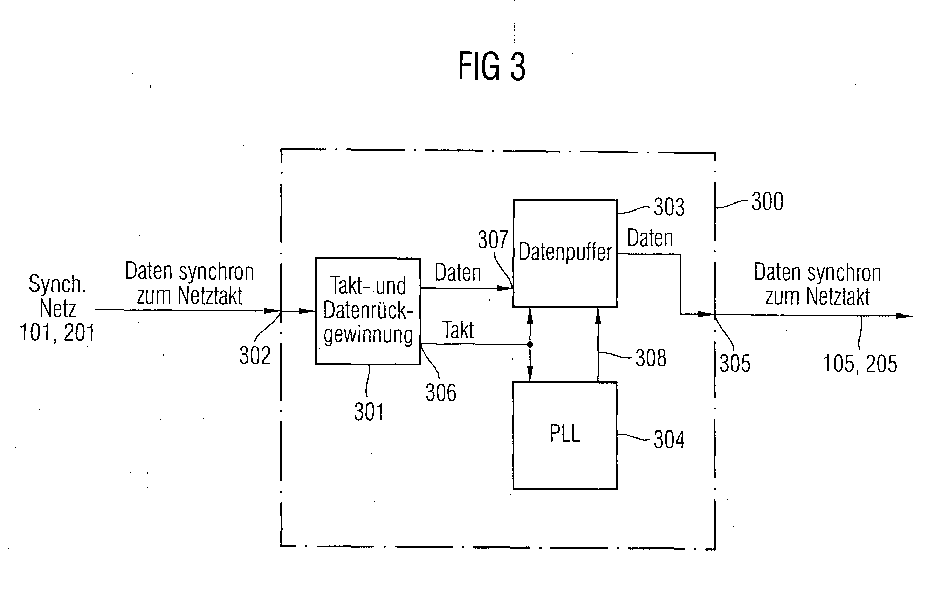

Fig. 3 zeigt den Aufbau einer Datenschnittstelle 300 (Anwender-Schnittstelle), welche sowohl als Netzabschluss 103 in Fig. 1 als auch als Netzabschluss 203 in Fig. 2 zur Anwendung kommen kann. Die Datenschnittstelle 300 weist eine Takt-und Datenrückgewinnungsschaltung 301 auf, welche über einen Eingang 302 mit dem synchronen Netz 101, 201 in Verbindung steht. Ferner umfasst die Datenschnittstelle 300 einen Datenpuffer 303 und eine PLL-Schaltung (Phase-Locked Loop bzw. Phasenrückkoppelschleife) 304. Ein Ausgang 305 des Datenpuffers 303 steht mit der synchronen Datenverbindung 105, 205 in Verbindung.

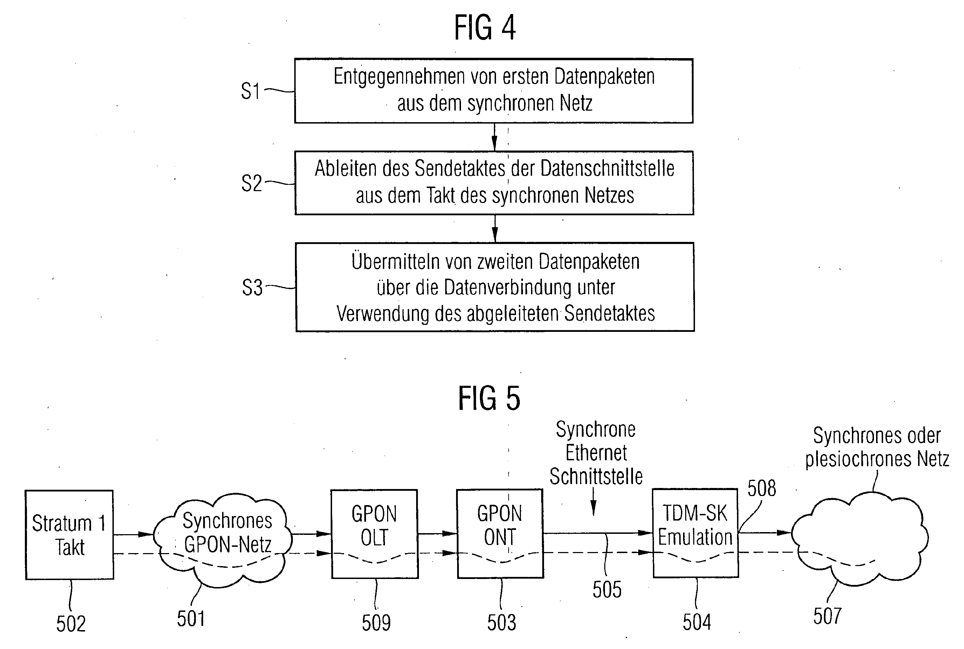

Die Funktionsweise der Datenschnittstelle 300 wird im Folgenden anhand der Figuren 3 und 4 erläutert.

Die Takt- und Datenrückgewinnungs-Schaltung 301 nimmt erste Datenpakete aus dem synchronen Netz 101, 201 entgegen (Schritt S1). Zum einen gewinnt die Takt- und Datenrückgewinnungs-Schaltung 301 aus dem am Eingang 302 einlaufenden Datenstrom den Takt des synchronen Netzes 101, 201 zurück. Der Takt wird an einem Ausgang 306 der Takt- und Datenrückgewinnungs-Schaltung 301 ausgegeben und sowohl zur Taktung eines Eingangs 307 des Datenpuffers 303 als auch als Referenztakt zur Steuerung der PLL-Schaltung 304 eingesetzt. Zum anderen detektiert die Takt- und Datenrückgewinnungs-Schaltung 301 die Daten des am Eingang 302 einlaufenden Datenstroms und leitet diese zu dem Eingang 307 des Datenpuffers 303.

Mittels der PLL-Schaltung 304 wird der Sendetakt für die Datenschnittstelle 300 aus dem erhaltenen Referenztakt (d.h. dem zurückgewonnenen Zentraltakt des synchronen Netzes 101, 201) abgeleitet. Das Ableiten des Sendetaktes für die Datenschnittstelle 300 ist in Fig. 4 im Schritt S2 dargestellt. Die PLL-Schaltung 304 kann dabei eine Vervielfachung bzw. Teilung des Bittaktes bzw. der Datenrate vornehmen. Die PLL-Schaltung 304 weist einen Sendetakt-Ausgang 308 auf, welcher den Ausgang 305 des Datenpuffers 303 taktet. Somit werden die Daten am Ausgang der Datenschnittstelle 300 mit dem von der PLL-Schaltung 304 erzeugten Sendetakt (welcher wie beschrieben von dem Takt des synchronen Netzes 101, 201 abgeleitet ist) ausgegegeben und über die Datenverbindung 105, 205 übertragen, siehe Schritt S3 der Fig. 4. Dabei ist die PLL-Schaltung 304 so ausgelegt, dass die Anforderungen hinsichtlich Jitter und Wander erfüllt sind.

Wie bereits erwähnt, können die über die Datenverbindung 105, 205 übertragenen Daten in zweiten Datenpaketen formatiert sein, die eine Datenstruktur aufweisen, die unterschiedlich zu der Datenstruktur der in dem synchronen Netz 101, 201 verwendeten ersten Datenpakete ist. Insofern kann die Datenschnittstelle 300 in nicht-dargestellter Weise eine Datenverarbeitungseinrichtung zur Neu-Formatierung von Datenpaketen für die Datenverbindung 105, 205 umfassen. Beispielsweise können eingangsseitig des Datenpuffers 303 eine Eingangsdatenverarbeitungsschaltung (nicht dargestellt) und ausgangsseitig des Datenpuffers 303 eine Ausgangsdatenverarbeitungsschaltung (nicht dargestellt) vorhanden sein. Die Eingangsdatenverarbeitungsschaltung wandelt die Datenstruktur der ersten Datenpakete in ein internes Datenformat für den Datenpuffer 303 um und die Ausgangsdatenverarbeitungsschaltung konvertiert die im internen Datenformat aus dem Pufferspeicher 303 ausgelesenen Daten in die Datenstruktur der zweiten Datenpakete. Unabhängig davon, wie und in welcher Form eine Umformatierung von Datenpaketen in der Datenschnittstelle 300 stattfindet, gewährleistet die Ableitung des Sendetaktes für die synchrone Datenverbindung 105, 205 aus dem Zentraltakt des synchronen Netzes 101, 201 stets, dass der Takt der synchronen Datenverbindung 105, 205 (d.h. der Sendetakt) mit hoher Genauigkeit in einem bekannten festen oder variabel fest einstellbaren Verhältnis zu dem Zentraltakt des synchronen Netzes 101, 201 steht.

Der in der beschriebenen Weise gewonnene Sendetakt wird verwendet, um die aus dem synchronen Netz 101, 201 erhaltenen Daten über die Datenschnittstelle 300 zum Netz-Endgerät 104 (siehe Fig. 1) bzw. zum Netzknoten 204 (siehe Fig. 2) zu senden. Zusätzliche Leitungen oder im Datenprotokoll übertragene Taktinformationen (z.B. Timestamps, Synchronisationsdatenpakete) sind zwischen der Datenschnittstelle 300 und dem Netz-Endgerät 104 bzw. dem Netzknoten 204 nicht erforderlich und typischerweise auch nicht vorhanden.

Fig. 5 zeigt ein weiteres Ausführungsbeispiel einer erfindungsgemäßen Anordnung, welche sowohl in Art der in Fig. 1 gezeigten Anordnung als auch in Art der in Fig. 2 gezeigten Anordnung realisiert sein kann. Das von einem zentralen Taktgenerator 502 getaktete synchrone Netz 501 wird am Beispiel eines GPON-Netzes erläutert. Ein GPON-Netz 501 umfasst eine Einheit 509, die als OLT (Optical Line Termination) bezeichnet ist und dem Netz-Provider zugeordnet ist, sowie eine Einheit ONT (Optical Network Termination) 503, die einem Kunden zugeordnet ist und eine Anwenderschnittstelle bildet, die das optische Signal z.B. in ein elektrisches Signal oder ein Funksignal umwandeln kann. Die Einheit ONT 503 ist über eine synchrone Datenverbindung 505 mit einer Einheit 504 verbunden, die entweder gemäß Fig. 1 ein Netz-Endgerät oder gemäß Fig. 2 einen Netzknoten eines weiteren synchronen Netzes darstellt. Im zweiten Fall weist die Einheit 504 einen Ausgang 508 auf, über welchen das weitere synchrone Netz 507 angekoppelt ist.

Die in der Einheit ONT 503 enthaltene Datenschnittstelle (Anwender-Schnittstelle) kann die vorstehend anhand der Figuren 1 bis 3 erläuterte Struktur und Funktionsweise aufweisen.

Bei der Datenverbindung 505 kann es sich (genauso wie bei den Datenverbindungen 105 und 205) beispielsweise um eine Ethernet-Datenverbindung handeln. Ein Netz-Endgerät 504 weist typischerweise eine Ethernet-Schnittstelle auf. Herkömmliche Ethernet-Datenverbindungen werden üblicherweise asynchron betrieben. Bei der vorliegenden Anordnung wird infolge des Ableitens des Taktes aus dem synchronen Netz 501 in der Einheit ONT 503 der Zentraltakt des synchronen Netzes 501 auf die Ethernet-Datenverbindung 505 übertragen. Die Ethernet-Datenverbindung 505 wird somit als synchrone Datenverbindung betrieben. Folglich steht der Einheit 504 in der bereits beschriebenen Weise der Zentraltakt des synchronen Netzes 501 zur Verfügung, ohne dass hierfür weitere Maßnahmen (gesonderte Übertragung von Taktinformation) erforderlich sind.

Sofern es sich bei der Einheit 504 um ein Netz-Endgerät handelt, kann dieses über Ethernet den Sendetakt der Einheit ONT und damit den Zentraltakt des synchronen Netzes 501 ermitteln und somit netzsynchrone Anwendungen ausführen. Ferner kann es sich, wie bereits erwähnt, bei der Einheit 504 um den Knoten eines weiteren, synchronen Netzes 507 handeln. Das weitere synchrone Netz 507 kann beispielsweise ein PDH (Plesiochronous Digital Hierarchy) Netz 507 sein. Der Netzknoten 504 führt in diesem Fall eine TDM-Schaltkreis-Emulation über Ethernet durch. D.h., der über die Ethernet-Datenverbindung 505 einlaufende TDM-Datenstrom, der eine in einem festen Verhältnis zum Zentraltakt des Netzes 101, 201 stehende Datenrate aufweist, wird in dem Netzknoten 504 bei der TDM-Schaltkreis-Emulation in Pakete für das weitere synchrone Netzwerk 507 eingepackt und in dieses weitere synchrone Netzwerk 507 eingespeist. Mit anderen Worten wird über die netzsynchrone Ethernet-Schnittstelle in der Einheit ONT 503 (Netzabschluss) und den Netzknoten 504 der Takt des synchronen Netzes 501 auf das weitere synchrone Netz 507 übertragen. Die Synchronität der beiden Netze 501 und 507 wird damit ohne eine aufwändige Synchronisierung mittels externer Komponenten über eine synchron betriebene Ethernet-Datenverbindung 505 und die in dem Netzknoten 504 erfolgende TDM-Schaltkreis-Emulation erreicht. Damit kann eine verbindungsorientierte Datenübertragung zum Netz 507 erreicht werden.

## Patentansprüche

1. Anordnung umfassend eine Datenschnittstelle (103, 300, 503), die einen Dateneingang (302) zur Entgegennahme von ersten Datenpaketen aus einem an den Dateneingang anschließbaren, synchronen Netz (101, 501) aufweist, ein Netz-Endgerät (104, 504) und eine sich zwischen der Datenschnittstelle (103, 300, 503) und dem Netz-Endgerät (104, 504) erstreckende paketorientierte, synchrone Datenverbindung (105, 505), wobei die Datenschnittstelle (103, 300, 503) ausgelegt ist, den Takt der Datenverbindung (105, 505) aus dem Takt des synchronen Netzes (101, 501) abzuleiten.

2. Anordnung nach Anspruch 1, wobei die Datenverbindung (105, 505) eine Ethernet-Datenverbindung ist.

3. Anordnung nach Anspruch 1 oder 2, wobei das synchrone Netz (101, 501) ein optisches Netz ist.

4. Anordnung nach einem der vorhergehenden Ansprüche, wobei das Netz-Endgerät (104, 504) ein PC oder eine Set-Top Box ist.

5. Anordnung nach einem der Ansprüche 1 bis 3, wobei das Netz-Endgerät (104, 504) eine Mobilfunk-Basisstation ist.

6. Anordnung nach einem der vorhergehenden Ansprüche, wobei die Datenschnittstelle (103, 300, 503) ein Netzabschluss (503) eines GPON-Netzes (501) ist.

7. Anordnung nach einem der Ansprüche 1 bis 5, wobei die Datenschnittstelle (103, 300, 503) ein Netzabschluss eines SONET-Netzes oder eines SDH-Netzes oder eines APON-Netzes oder eines BPON-Netzes oder eines EPON-Netzes oder eines 10G EPON-Netzes ist.

8. Anordnung nach einem der vorhergehenden Ansprüche, wobei die Datenschnittstelle (103, 300, 503) umfasst:
eine Takt-Rückgewinnungsschaltung (301) zur Ermittlung des Taktes des synchronen Netzes (101, 501),
eine Sendetakt-Erzeugungsschaltung (304) zur Ableitung des Taktes der Datenverbindung (105, 505) aus dem Takt des synchronen Netzes (101, 501).

9. Anordnung nach Anspruch 8, wobei die gesamte Sendetakt-Erzeugungsschaltung (304) als integrierte Schaltung ausgeführt ist.

10. Anordnung nach Anspruch 8 oder 9, wobei die Sendetakt-Erzeugungsschaltung (304) eine PLL umfasst.

11. Anordnung nach einem der vorhergehenden Ansprüche, wobei die Datenschnittstelle (103, 300, 503) einen Datenpuffer (303) mit einem mit dem Takt des synchronen Netzes (101, 501) getakteten Datenpuffer-Eingang und einen mit dem Takt der Datenverbindung (105, 505) getakteten Datenpuffer-Ausgang (305) aufweist.

12. Anordnung nach einem der vorhergehenden Ansprüche, wobei die Datenschnittstelle (103, 300,.503) eine Datenverarbeitungsschaltung aufweist, welche in einem oder mehreren ersten Datenpaketen enthaltene Daten in zweite Datenpakete zur Ausgabe an die Datenverbindung (105, 505) konvertiert.

13. Anordnung umfassend eine Datenschnittstelle (203, 300, 503), die einen Dateneingang (302) zur Entgegennahme von ersten Datenpaketen aus einem an den Dateneingang anschließbaren ersten synchronen Netz (201, 501) aufweist, einen Netzknoten (204, 504) eines zweiten synchronen oder plesiochronen Netzes (207, 507) und eine sich zwischen der Datenschnittstelle (203, 300, 503) und dem Netzknoten (204, 504) erstrekkende paketorientierte, synchrone Datenverbindung (205, 505), wobei die Datenschnittstelle (203, 300, 503) ausgelegt ist, den Takt der Datenverbindung (205, 505) aus dem Takt des ersten synchronen Netzes (201, 501) abzuleiten.

14. Anordnung nach Anspruch 13, wobei die Datenverbindung (205, 505) eine Ethernet-Datenverbindung ist.

15. Anordnung nach Anspruch 13 oder 14, wobei das erste synchrone Netz (207, 507) ein optisches Netz ist.

16. Anordnung nach einem der Ansprüche 13 bis 15, wobei der Netzknoten (204, 504) ausgelegt ist, ein Netzknoten eines PDH-Netzes zu sein.

17. Anordnung nach einem der Ansprüche 13 bis 16, wobei die Datenschnittstelle (203, 300, 503) ein Netzabschluss (503) eines GPON-Netzes (501) ist.

18. Anordnung nach einem der Ansprüche 13 bis 16, wobei die Datenschnittstelle (203, 300, 503) ein Netzabschluss eines SONET-Netzes oder eines SDH-Netzes oder eines APON-Netzes oder eines BPON-Netzes oder eines EPON-Netzes oder eines 10G EPON-Netzes ist.

19. Anordnung einem der Ansprüche 13 bis 18, wobei die Datenschnittstelle (203, 300, 503) umfasst:
eine Takt-Rückgewinnungsschaltung (301) zur Ermittlung des Taktes des ersten synchronen Netzes (201), und
eine Sendetakt-Erzeugungsschaltung (304) zur Ableitung des Taktes der Datenverbindung (205, 505) aus dem Takt des ersten synchronen Netzes (201, 501).

20. Anordnung nach Anspruch 19, wobei die gesamte Sendetakt-Erzeugungsschaltung (304) als integrierte Schaltung ausgeführt ist.

21. Anordnung nach Anspruch 19 oder 20, wobei die Sendetakt-Erzeugungsschaltung (304) eine PLL umfasst.

22. Anordnung nach einem der Ansprüche 13 bis 21, wobei die Datenschnittstelle (203, 300, 503) einen Datenpuffer (303) mit einem mit dem Takt des ersten synchronen Netzes (201, 501) getakteten Datenpuffer-Eingang (307) und einem mit dem Takt der Datenverbindung (205, 505) getakteten Datenpuffer-Ausgang (305) aufweist.

23. Anordnung nach einem der Ansprüche 13 bis 22, wobei die Datenschnittstelle (203, 300, 503) eine Datenverarbeitungsschaltung aufweist, welche in einem oder mehreren ersten Datenpaketen enthaltene Daten in zweite Datenpakete zur Ausgabe an die Datenverbindung (205, 505) konvertiert.

24. Anordnung umfassend eine Datenschnittstelle (103, 203, 300, 503), die einen Dateneingang (302) zur Entgegennahme von ersten Datenpaketen aus einem an den Dateneingang anschließbaren, synchronen Netz (102, 202, 502) aufweist, als Netzabschluss des synchronen Netzes (102, 202, 502) ausgelegt ist und einen Datenausgang (305) aufweist, der mit einer paketorientierte Datenverbindung (105, 205, 505) gekoppelt ist, wobei die Datenschnittstelle (103, 203, 503) ausgelegt ist, den Takt der Datenverbindung (105, 205, 505) aus dem Takt des synchronen Netzes (101, 201, 501) abzuleiten.

25. Datenschnittstelle, umfassend:
einen Dateneingang (302) zur Entgegennahme von ersten Datenpaketen aus einem an den Dateneingang (302) anschließbaren synchronen Netz (101, 201, 501),
eine Takt-Rückgewinnungsschaltung (301) zur Ermittlung des Taktes des synchronen Netzes (101, 201, 501),
eine Sendetakt-Erzeugungsschaltung (304) zur Ableitung eines netzsynchronen Sendetaktes aus dem Takt des synchronen Netzes (101, 201, 501), und
einen Datenausgang (305) zur Ausgabe von zweiten Datenpaketen mit dem netzsynchronen Sendetakt.

26. Datenschnittstelle nach Anspruch 25, wobei die Sendetakt-Erzeugungsschaltung (304) eine PLL umfasst.

27. Datenschnittstelle nach Anspruch 25 oder 26, umfassend einen Datenpuffer (303) mit einem mit dem Takt des Netzes (101, 201) getakteten Datenpuffer-Eingang (307) und einem mit dem netzsynchronen Sendetakt getakteten Datenpuffer-Ausgang (305).

28. Datenschnittstelle nach einem der Ansprüche 25 bis 27, umfassend eine Datenverarbeitungsschaltung, welche die in einem oder mehreren der ersten Datenpakete enthaltenen Daten in die zweiten Datenpakete konvertiert.

29. Verfahren zur Erzeugung eines Taktes einer paketorientierten, synchronen Datenverbindung, umfassend:
Entgegennehmen von ersten Datenpaketen aus einem synchronen Netz (101, 501),
Ableiten eines Taktes für die Datenverbindung (105, 505) aus dem Takt des synchronen Netzes (101, 501), und
Übermitteln von zweiten Datenpaketen, die Daten der ersten Datenpakete enthalten, über die Datenverbindung (105, 505) unter Verwendung des abgeleiteten Taktes zu einem Netz-Endgerät (104, 504).

30. Verfahren nach Anspruch 29, wobei das Ableiten des Taktes umfasst:
Rückgewinnen des Taktes des synchronen Netzes (101, 501), Erzeugen des Taktes der Datenverbindung (105, 505) aus dem rückgewonnenen Takt des synchronen Netzes (101, 501).

31. Verfahren nach Anspruch 30, wobei zur Erzeugung des Taktes der Datenverbindung (105, 505) eine PLL mit dem rückgewonnenen Takt des synchronen Netzes (101, 501) angesteuert wird.

32. Verfahren nach Anspruch 30 oder 31, wobei an einem mit dem rückgewonnenen Takt getakteten Eingang (307) einer Datenverarbeitungsschaltung die ersten Datenpakete entgegengenommen werden, und
an einem mit dem Takt der Datenverbindung (105, 505) getakteten Ausgang (305) der Datenverarbeitungsschaltung zweite Datenpakete an die Datenverbindung (105, 505) ausgegeben werden.

33. Verfahren zur Erzeugung eines Taktes einer paketorientierten, synchronen Datenverbindung, umfassend:
Entgegennehmen von ersten Datenpaketen aus einem ersten synchronen Netz (201, 501),
Ableiten eines Taktes für die Datenverbindung (205, 505) aus dem Takt des ersten synchronen Netzes (201, 501), und
Übermitteln von zweiten Datenpaketen, die Daten der ersten Datenpakete enthalten, über die Datenverbindung (205, 505) unter Verwendung des abgeleiteten Taktes zu einem Netzknoten (204, 504) eines zweiten synchronen Netzes (207).

34. Verfahren nach Anspruch 33, wobei das Ableiten des Taktes umfasst:
Rückgewinnen des Taktes des ersten synchronen Netzes (201, 501),
Erzeugen des Taktes der Datenverbindung (205, 505) aus dem rückgewonnenen Takt des ersten synchronen Netzes (205).

35. Verfahren nach Anspruch 34, wobei zur Erzeugung des Taktes der Datenverbindung (205, 505) eine PLL mit dem rückgewonnenen Takt des ersten synchronen Netzes (201, 501) angesteuert wird.

36. Verfahren nach Anspruch 34 oder 35, wobei an einem mit dem rückgewonnenen Takt getakteten Eingang (307) einer Datenverarbeitungsschaltung die ersten Datenpakete entgegengenommen werden, und
an einem mit dem Takt der Datenverbindung (205, 505) getakteten Ausgang (305) der Datenverarbeitungsschaltung zweite Datenpakete an die Datenverbindung (205, 505) ausgegeben werden.
